# EUROPÄISCHE PATENTANMELDUNG

(11) **EP 2 249 218 A2**
(43) Veröffentlichungstag der Anmeldung: **10.11.2010**
(21) Anmeldenummer: 10004340.5
(22) Anmeldetag: 23.04.2010
(51) Int. Cl.: G05B 19/042

(54) **Funktionseinheit zur Steuerung und/oder Überwachung eines Antriebs**

(30) Priorität: 07.05.2009 DE 102009020212
(71) Anmelder: ABB AG, 68309 Mannheim (DE)
(72) Erfinder: Müller, Peter, O., 69221 Dossenheim (DE); Stegmaier, Peter, Dipl.-Ing., 68305 Mannheim (DE)

(57) **Zusammenfassung**

Die Erfindung bezieht sich auf eine Funktionseinheit zur Steuerung und/oder Überwachung eines Antriebs, mit einem Motorcontroller (10), der über eine Kommunikationsschnittstelle (40) mit einer Anzeige- und Bedieneinheit (20) verbunden ist, wobei die Konfiguration und/oder Bedienung des Motorcontrollers (10) über die Anzeige- und Bedieneinheit (20) ausführbar ist und die Anzeige- und Bedieneinheit (20) über eine weitere Schnittstelle (50) mit einer Datenverarbeitungseinrichtung, auch als Konfigurations- PC (30) bezeichnet, verbunden ist. Der Konfigurations- PC (30) weist eine Softwarekomponente (SK) auf, welche über die weitere Schnittstelle (50) der Anzeige- und Bedieneinheit (20) mit dem Motorcontroller (10) kommuniziert und so eine Konfiguration und/oder Bedienung des Motorcontrollers (10) am Konfigurations-PC (30) ausführt.

## Beschreibung

Die Erfindung betrifft eine Funktionseinheit zur Steuerung und/oder Überwachung eines Antriebs, welche beispielsweise in ein Automatisierungssystem zur Steuerung und Überwachung eines technischen Prozesses oder einer technischen Anlage integrierbar ist.

Zur Steuerung und/oder Überwachung eines Antriebes werden üblicherweise Motorcontroller eingesetzt, die vorzugsweise als Motorsteuergerät, Motorschutzgerät, Stellungsregler oder Frequenzumrichter ausgeführt sind und deren Konfiguration, beispielsweise bezüglich der Motorschutzparameter, des Nennstroms oder der Art der Ansteuerung des Motors, über Anzeige- und Bedieneinheiten ausgeführt wird. Dazu sind die Anzeige- und Bedieneinheiten über eine Kommunikationsschnittstelle mit dem Motorcontroller verbunden.

Die Anzeige- und Bedieneinheiten sind über eine weitere Schnittstelle an eine Datenverarbeitungseinrichtung, nachfolgend als PC bezeichnet, anschließbar, der es ermöglicht den Motorcontroller über den PC zu konfigurieren. Die Konfiguration des Motorcontrollers über den PC erfordert eine speziell für den PC entwickelte Konfigurationssoftware, die dem Bediener die Konfiguration des Motorcontrollers am PC ermöglicht. Diese Konfigurationssoftware auf dem PC unterscheidet sich völlig von der auf der Bedien- und Anzeigeeinheit installierten als Firmware bezeichneten Software für die Bedienung der Anzeige- und Bedieneinheit.

Der Erfindung liegt demgemäß die Aufgabe zugrunde, eine Funktionseinheit zur Steuerung und/oder Überwachung eines Antriebs bereitzustellen, wodurch die Konfiguration der Anzeige- und Bedieneinheit eines Motorcontrollers vereinfacht wird.

Diese Aufgabe wird erfindungsgemäß durch eine Funktionseinheit mit den im Anspruch 1 angegebenen Merkmalen gelöst. Vorteilhafte Ausgestaltungen und Verbesserungen der erfindungsgemäßen Funktionseinheit sind in weiteren Ansprüchen und in der Beschreibung angegeben.

Die erfindungsgemäße Funktionseinheit zur Steuerung und/oder Überwachung eines Antriebs umfasst einen Motorcontroller, der über eine Kommunikationsschnittstelle mit einer Anzeige- und Bedieneinheit verbunden ist, wobei die Konfiguration und/oder Bedienung des Motorcontrollers über die Anzeige- und Bedieneinheit ausführbar ist und die Anzeige- und Bedieneinheit über eine weitere Schnittstelle mit einer Datenverarbeitungseinrichtung, auch als Konfigurations- PC bezeichnet, verbunden ist. Der Konfigurations- PC weist eine Softwarekomponente auf, welche über die weitere Schnittstelle der Anzeige- und Bedieneinheit mit dem Motorcontroller kommuniziert, so dass eine Konfiguration und/oder Bedienung des Motorcontrollers am Konfigurations- PC ausführbar ist.

Die Softwarekomponente ist erfindungsgemäß so ausgeführt, dass sie eine grafische Benutzerschnittstelle hardwareunabhängig realisiert.

Durch eine Nachbildung der Anzeige- und Bedieneinheit mittels der auf dem PC installierten Softwarekomponente ist in vorteilhafter Weise gewährleistet, dass die Konfiguration und/oder Bedienung des Motorcontrollers über die Anzeige- und Bedieneinheit und/oder über den PC mit einer einheitlichen Bedien- und Anzeigeoberfläche erfolgen kann, wodurch die Konfiguration der Anzeige- und Bedieneinheit des Motorcontrollers vereinfacht wird.

In einer vorteilhaften Ausgestaltung der erfindungsgemäßen Funktionseinheit weist die Anzeige- und Bedieneinheit eine Anzeige auf, welche eine Bedienung und/oder Konfiguration über den Konfigurations- PC erfasst und/oder darstellt. Somit wird nach dem Anschluss des PCs an die Anzeige- und Bedieneinheit an diesem ein Hinweis angezeigt, sobald eine Bedienung und/oder Konfiguration über den PC erfolgt.

Mit der vorab beschriebenen erfindungsgemäßen Funktionseinheit ist auch eine parallele Bedienung und/oder Anzeige am Motorcontroller realisierbar, wenn Anzeige- und Bedieneinheit und PC gleichzeitig mit dem Motorcontroller über die entsprechenden Schnittstellen verbunden sind.

In einer besonderen Ausführungsform der Erfindung weist der Motorcontroller eine weitere Kommunikationsschnittstelle auf, an die der Konfigurations- PC direkt anschließbar ist.

Um einen technisch einfach durchzuführenden Datenaustausch zwischen dem Konfigurations- PC und der Anzeige- und Bedieneinheit durchzuführen, ist die weitere Schnittstelle und/oder die weitere Kommunikationsschnittstelle als USB-Schnittstelle ausgeführt.

In einer weiteren Ausführungsform ist die weitere Schnittstelle als Funkschnittstelle ausgeführt, welche den Konfigurations- PC über eine drahtlose Verbindung mit der Anzeige- und Bedieneinheit verbindet und die vom Konfigurations- PC bereitgestellten Applikationsdaten oder Parameter drahtlos in die Anzeige- und Bedieneinheit überträgt.

Ein besonderer Vorteil der Erfindung beruht darauf, dass mit der erfindungsgemäßen Funktionseinheit eine einfache Inbetriebnahme des Motorcontrollers durchführbar ist, da sowohl auf dem Konfigurations- PC als auch auf der Bedien- und Anzeigeeinheit durch die eingesetzte gleich ausgeführte Softwarekomponente eine einheitliche Bedien- und/oder Anzeigeoberfläche bzw. Benutzeroberfläche vorhanden ist, also beide Benutzeroberflächen ein gleiches Aussehen aufweisen und eine gleiche Handhabung ermöglichen.

Weiterhin kann ein Remote Zugriff auf den Motorcontroller über eine Freigabe des PCs im Netzwerk erfolgen. Insbesondere zur Unterstützung der Inbetriebnahme und/oder zu Diagnosezwecke wird über den vorgesehenen Remote Zugriff der Bildschirm des PCs freigegeben, so dass ein entfernter Benutzer auf den PC und damit auf den Motorcontroller zugreifen kann.

Anhand des in der folgenden Figur dargestellten Ausführungsbeispieles sollen die Erfindung sowie vorteilhafte Ausgestaltungen, Verbesserungen und weitere Vorteile der Erfindung näher erläutert und beschrieben werden.

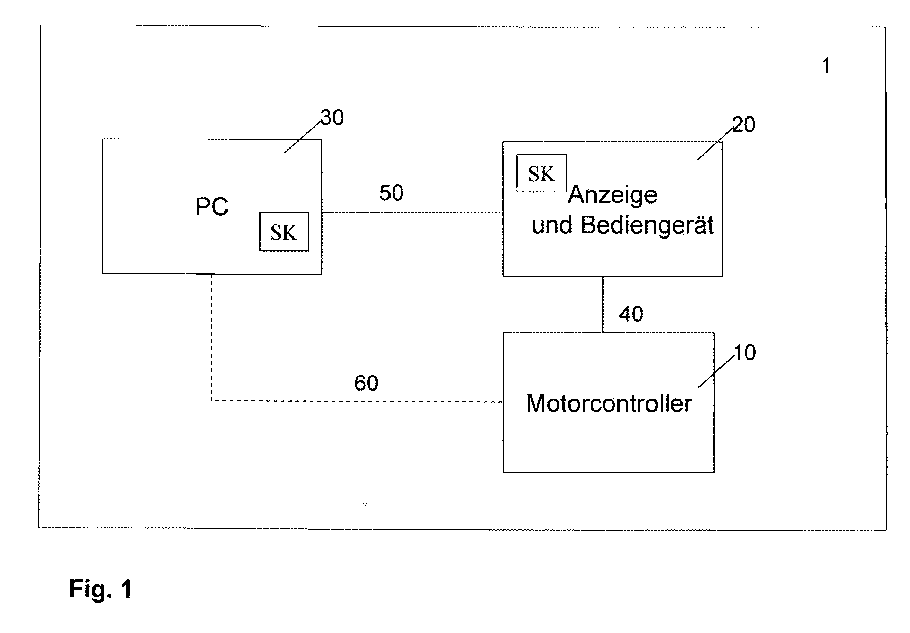

Fig. 1 zeigt eine beispielhafte Ausführungsform der erfindungsgemäßen Funktionseinheit 1 zur Steuerung und/oder Überwachung eines Antriebes, wobei die Funktionseinheit in ein Automatisierungssystem integrierbar ist.

Die erfindungsgemäße Funktionseinheit 1 umfasst ein Motorsteuergerät 10, das über eine Kommunikationsschnittstelle 40 mit einer Anzeige- und Bedieneinheit 20 verbunden ist. Eine Konfiguration und Bedienung des Motorsteuergerätes 10 wird über die Anzeige- und Bedieneinheit 20 durchgeführt, wobei die Anzeige- und Bedieneinheit 20 dazu eine grafische Benutzeroberfläche aufweist.

Die Anzeige- und Bedieneinheit 20 ist über eine weitere, als USB- Schnittstelle ausgeführte Schnittstelle 50 mit einem Konfigurations- PC 30 verbunden.

Im Konfigurations- PC 30 ist eine Softwarekomponente SK integriert, welche dafür vorgesehen ist über die USB- Schnittstelle 50 und die Anzeige- und Bedieneinheit 20 mit dem Motorsteuergerät 10 eine Konfiguration und/oder Bedienung des Motorsteuergerätes 10 am Konfigurations- PC 30 auszuführen und dazu die gleiche Benutzeroberfläche wie die Anzeige- und Bedieneinheit 20 nutzt.

Somit ist die erfindungsgemäße Funktionseinheit 1 vorteilhafterweise in der Lage, eine von der Bedien- und Anzeigeeinheit 20 verwendete Softwarekomponente SK auch auf dem PC 30 auszuführen, indem ein genaues Abbild der Benutzeroberfläche auf dem PC 30 abgelegt ist. Dabei müssen die in der Softwarekomponente SK programmierten Menü- und Bedienroutinen nur einmal entwickelt werden. Die Unterschiede in der Ansteuerung des PC-Bildschirms und des Displays der bedien- und Anzeigeeinheit 20 sind nicht Bestandteil der Softwarekomponente SK, sondern in separate Gerätetreiber ausgelagert.

In einer vorteilhaften Ausführungsform der Erfindung ist der PC 30 direkt mit dem Motorsteuergerät 10 über eine weitere Kommunikationsschnittstelle 60 verbunden, so dass der PC 30 auch direkt an das Motorsteuergerät 10 anschließbar ist.

## Patentansprüche

1. Funktionseinheit zur Steuerung und/oder Überwachung eines Antriebs, mit einem Motorcontroller (10), der über eine Kommunikationsschnittstelle (40) mit einer Anzeige- und Bedieneinheit (20) verbunden ist, wobei die Konfiguration und/oder Bedienung des Motorcontrollers (10) über die Anzeige- und Bedieneinheit (20) ausführbar ist und die Anzeige- und Bedieneinheit (20) über eine weitere Schnittstelle (50) mit einer Datenverarbeitungseinrichtung, auch als Konfigurations- PC (30) bezeichnet, verbunden ist, **dadurch gekennzeichnet, dass** der Konfigurations- PC (30) eine Softwarekomponente (SK) aufweist, welche über die weitere Schnittstelle (50) der Anzeige- und Bedieneinheit (20) mit dem Motorcontroller (10) kommuniziert und so eine Konfiguration und/oder Bedienung des Motorcontrollers (10) am Konfigurations- PC (30) ausführbar ist.

2. Funktionseinheit nach Anspruch 1, **dadurch gekennzeichnet, dass** die Softwarekomponente (SK) eine grafische Benutzerschnittstelle hardwareunabhängig realisiert.

3. Funktionseinheit nach einem der vorherigen Ansprüche, **dadurch gekennzeichnet, dass** die weitere Schnittstelle (50) als USB- Schnittstelle ausgeführt ist.

4. Funktionseinheit nach einem der Ansprüche 1 oder 2, **dadurch gekennzeichnet, dass** die weitere Schnittstelle (50) als Funkschnittstelle ausgeführt ist.

5. Funktionseinheit nach einem der vorherigen Ansprüche, **dadurch gekennzeichnet, dass** auf die Anzeige- und Bedieneinheit (20) eine Anzeige aufweist, welche eine Bedienung und/oder Konfiguration am Konfigurations- PC (30) erfasst und/oder darstellt.

6. Funktionseinheit nach einem der vorherigen Ansprüche, **dadurch gekennzeichnet, dass** auf dem Konfigurations- PC (30) und auf der Bedien- und Anzeigeeinheit (20) eine einheitliche Bedien- und/oder Anzeigeoberfläche vorliegen.

7. Funktionseinheit nach einem der vorherigen Ansprüche, **dadurch gekennzeichnet, dass** der Motorcontroller (10) eine weitere Kommunikationsschnittstelle (60) aufweist, an die der Konfigurations- PC (30) direkt anschließbar ist.
